# EUROPEAN PATENT APPLICATION

(11) **EP 3 088 792 A1**
(43) Date of publication of application: **02.11.2016**
(21) Application number: 14874567.2
(22) Date of filing: 22.12.2014
(51) Int. Cl.: F17C 13/00, B63B 25/16, B63H 21/38, F02D 19/02, F02D 29/02, F02M 21/02

(54) **LIQUEFIED FUEL GAS EVAPORATION PROMOTING DEVICE AND FUEL GAS SUPPLY SYSTEM FOR SHIPS**

(30) Priority: 26.12.2013 JP 2013268868
(71) Applicant: Kawasaki Jukogyo Kabushiki Kaisha, Kobe-shi, Hyogo 650-8670 (JP)
(72) Inventor: AOKI, Kazunori, Kobe-shi, Hyogo 650-8670 (JP); NOZAKI, Takumi, Kobe-shi, Hyogo 650-8670 (JP); UEDA, Kazuo, Kobe-shi, Hyogo 650-8670 (JP)
(74) Representative: Leinweber & Zimmermann
(86) International application number: PCT/JP2014/006395
(87) International publication number: WO 2015/098092

(57) **Abstract**

A liquefied fuel gas boil-off accelerating apparatus (4) includes: a heater (42) configured to heat a liquefied fuel gas; draw piping (41), through which the liquefied fuel gas stored in a tank (1) is fed to the heater (42); a pump (43) configured to pressure-feed the liquefied fuel gas to the heater (42); and return piping (44), through which the liquefied fuel gas heated by the heater (42) is introduced, in liquid form, into a liquid layer of the liquefied fuel gas in the tank (1). A fuel gas supply system (10) includes: the tank (1); the liquefied fuel gas boil-off accelerating apparatus (4); and fuel gas supply piping (9), through which a boil-off gas generated from the liquefied fuel gas stored in the tank (1) is fed to a gas fuelled engine (2).

## Description

### Technical Field

The present invention relates to a liquefied fuel gas boil-off accelerating apparatus for accelerating boil-off of a liquefied fuel gas stored in a tank mounted on a ship, and to a system for supplying a fuel gas to a gas fuelled engine installed in a ship.

### Background Art

While ships such as liquefied fuel gas carriers, for example, LNG carriers, and those using a liquefied fuel gas as a fuel are out at sea, part of the liquefied fuel gas stored in a tank, such as LNG (Liquefied Natural Gas), naturally boils off, and as a result, NBOG (Natural Boil-off Gas) is generated. The NBOG thus generated has been used in an LNG carrier as a fuel of a boiler for driving the steam turbine of a main engine, or as a fuel of an engine such as an engine intended for electric power generation. In recent years, marine gas fuelled engines using a gas fuel such as LNG have been developed. In the description and claims herein, the aforementioned turbine-boiler plant, engine for power generator, and gas fuelled engine are collectively referred to as gas fuelled engines.

Types of gas fuelled engines include: gas engines using only a fuel gas as a fuel; and dual-fuel engines using both a fuel gas and a fuel oil such as heavy oil as fuels. In such gas fuelled engines, a pressurized fuel gas is used as a fuel. Types of gas fuelled engines also include 2-cycle engines and 4-cycle engines. In a 2-cycle engine, the fuel gas is directly injected into the cylinder with a high pressure of about 15 to 30 MPa, and ignited and combusted. In a 4-cycle engine, the fuel gas is sucked into the cylinder with a pressure of about 0.5 MPa and compressed therein, and then ignited and combusted.

In a case where a gas fuelled engine is installed in an LNG carrier or in a ship that uses LNG as a fuel, the amount of NBOG naturally generated in a cargo tank or fuel tank may be insufficient to satisfy a necessary amount of fuel gas for the gas fuelled engine. In such a case, FBOG (Forced Boil-Off Gas) obtained by forcibly vaporizing the LNG in the tank by a vaporizer is used to compensate for the insufficiency of the fuel gas.

However, the components of NBOG are different from the components of FBOG. NBOG contains methane as a major component, which is a low-boiling point component contained in LNG, and the remaining component of NBOG is nitrogen as an impurity. On the other hand, the components of FBOG are the same as the LNG composition. In general, FBOG contains, in addition to methane and nitrogen, a large amount of heavy components with high carbon numbers, such as ethane and propane. In the case of a gas fuelled engine, particularly a 4-cycle engine, an increase in the heavy component content in the fuel gas causes knocking in the compression stroke after the suction of the fuel gas. For this reason, there are cases where it is unavoidable to reduce the engine output when operating the engine. In the case of using a mixture of NBOG and FBOG, complex output adjustments are necessary in accordance with its mixture ratio. Moreover, frequent output adjustments may be required depending on where the ship navigates. It is difficult to supply FBOG as an additional fuel in accordance with such output adjustments so that the supply amount of FBOG will not be excessive or insufficient. In order to solve these problems, Patent Literature 1 proposes a system for supplying a fuel gas that contains almost no heavy component to a gas fuelled engine.

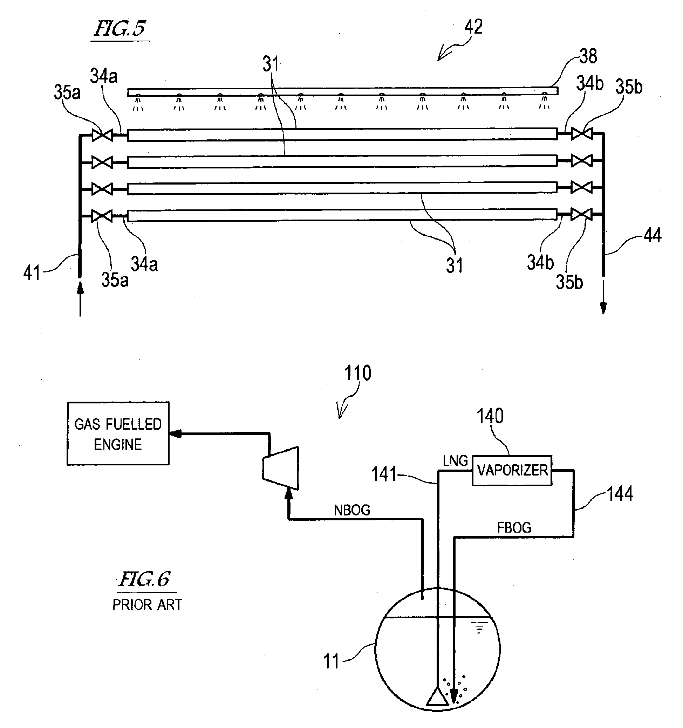

FIG. 6 shows a schematic configuration of a part of a system for supplying a fuel gas to an engine of an LNG carrier, which is described in prior-art Patent Literature 1. As shown in FIG. 6, a fuel gas supply system 110 of Patent Literature 1 is configured to forcibly vaporize LNG that has been drawn from a tank 11 through piping 141 by using a vaporizer 140, thereby generating FBOG, and feed the generated FBOG to the tank 11 through piping 144, such that the FBOG is introduced into a liquid layer of the LNG at the bottom of the tank 11. The FBOG introduced into the liquid layer of the LNG in the tank 11 is, while moving upward within the liquid layer of the LNG, dissolved in the LNG and liquefied again. Here, thermal energy that the FBOG has received in the vaporizer 140 is absorbed by the LNG in the tank 11. This thermal energy accelerates the boil-off of the LNG in the tank 11, thereby accelerating the generation of NBOG with a high ratio of methane.

### Citation List

### Patent Literature

PTL 1: Japanese Laid-Open Patent Application Publication No. 2006-63817

### Summary of Invention

### Technical Problem

Generally speaking, an LNG vaporizer installed in a ship is a heat exchanger that vaporizes LNG through heat exchange with steam generated by a boiler. In the case of such an LNG vaporizer, it is difficult to obtain only an output that is less than the output range of the vaporizer. For example, in a case where an amount of LNG corresponding to a necessary amount of FBOG (i.e., an amount of LNG corresponding to a necessary output) falls below 10 % of the rated capacity of the vaporizer, it is difficult to vaporize only that amount of LNG. Therefore, the LNG is vaporized excessively, and excessive thermal energy is supplied into the tank. Thus, for the prior-art fuel gas supply system described in Patent Literature 1, there is room for improvement mainly in terms of energy saving.

In view of the above, an object of the present invention is to provide a liquefied fuel gas boil-off accelerating apparatus for accelerating boil-off of a liquefied fuel gas stored in a tank mounted on a ship, the apparatus being capable of increasing the amount of boil-off of the liquefied fuel gas while realizing energy saving. Another object of the present invention is to provide a fuel gas supply system of a ship in which a gas fuelled engine is installed, the system being capable of stably supplying a high-quality fuel gas that contains almost no heavy component while realizing energy saving.

### Solution to Problem

A liquefied fuel gas boil-off accelerating apparatus according to one aspect of the present invention is a liquefied fuel gas boil-off accelerating apparatus for accelerating boil-off of a liquefied fuel gas stored in a tank, and the liquefied fuel gas boil-off accelerating apparatus includes: a heater configured to heat the liquefied fuel gas; a pump configured to pressure-feed the liquefied fuel gas stored in the tank to the heater; draw piping, through which the liquefied fuel gas is fed to the heater from the pump; and return piping, through which the liquefied fuel gas heated by the heater is fed, in liquid form, into the tank.

The liquefied fuel gas boil-off accelerating apparatus with the above configuration returns the liquefied fuel gas heated by the heater into the tank, and thereby thermal energy is imparted to the liquefied fuel gas in the tank. The imparted thermal energy accelerates natural boil-off of the liquefied fuel gas in the tank, and thereby the amount of NBOG generation can be increased. The generated NBOG is a high-quality fuel gas containing almost no heavy component. Since the heater merely heats the liquefied fuel gas without vaporizing it, necessary energy for heating the liquefied fuel gas can be reduced compared to a case where the liquefied fuel gas is vaporized. Moreover, since the heater does not vaporize the liquefied fuel gas, the heater is free from restriction on the minimum output of its output range although a vaporizer has such restriction due to difficulty in control when operating the vaporizer with low output. That is, the heater is capable of lower output than the output range of a vaporizer. This makes it possible to suppress excessive supply of thermal energy to the tank.

In the above liquefied fuel gas boil-off accelerating apparatus, desirably, the heater is a heat exchanger configured to transfer heat from an atmosphere to the liquefied fuel gas. In this case, desirably, the heater includes at least one heating pipe, through which the liquefied fuel gas passes, and the heating pipe is a bare pipe whose surface is exposed to the atmosphere.

According to the above configuration, the heating medium for heating the liquefied fuel gas is the atmosphere. This makes it possible to reduce energy for heating the heating medium. In addition, by using a bare pipe as the heating pipe, the structure of the heater can be simplified.

In the above liquefied fuel gas boil-off accelerating apparatus, desirably, the heating pipe includes a plurality of heating regions arranged in a pipe length direction of the heating pipe, and a liquefied fuel gas passage, in which the number of the heating regions through which the liquefied fuel gas passes is selectable, is formed in the heater. Alternatively, desirably, the heater includes a plurality of the heating pipes, and a liquefied fuel gas passage, in which the number of the heating pipes through which the liquefied fuel gas passes is selectable, is formed in the heater.

According to the above configuration, the degree of heating of the liquefied fuel gas by the heater, i.e., the amount of thermal energy imparted to the liquefied fuel gas by the heater, can be adjusted.

In the above liquefied fuel gas boil-off accelerating apparatus, desirably, the pump pressurizes the liquefied fuel gas, such that the liquefied fuel gas in the return piping does not vaporize.

In the above liquefied fuel gas boil-off accelerating apparatus, an ending edge of the return piping may be positioned at a bottom of the tank.

According to the above configuration, even if the amount of liquefied fuel gas stored in the tank is reduced, the heated liquefied fuel gas can be introduced into a liquid layer of the liquefied fuel gas.

In the above liquefied fuel gas boil-off accelerating apparatus, the heater may include: at least one heating pipe, through which the liquefied fuel gas passes; and a sprinkling device configured to sprinkle water on a surface of the heating pipe.

There is a case where frost is formed on the surface of the heating pipe due to humidity in the atmosphere, and thereby heat exchange is suppressed. In this respect, by sprinkling water on the pipe surface by the sprinkling device in advance and forming ice around the heating pipe, the formation of frost on the heating pipe can be suppressed, and thereby heat exchange by the heating pipe can be accelerated.

A marine fuel gas supply system according to another aspect of the present invention is a marine fuel gas supply system for supplying a fuel gas to a gas fuelled engine installed in a ship, and the marine fuel gas supply system includes: a tank storing a liquefied fuel gas; the above-described liquefied fuel gas boil-off accelerating apparatus; and fuel gas supply piping, through which a boil-off gas generated from the liquefied fuel gas stored in the tank is fed to the gas fuelled engine.

In the marine fuel gas supply system with the above configuration, the liquefied fuel gas heated by the heater is returned into the tank, and thereby thermal energy is imparted to the liquefied fuel gas in the tank. The imparted thermal energy accelerates natural boil-off of the liquefied fuel gas in the tank, and thereby the amount of NBOG generation can be increased. Since the generation of NBOG in the tank is accelerated in the above-described manner, a high-quality fuel gas containing almost no heavy component can be stably supplied to the gas fuelled engine. Since the heater merely heats the liquefied fuel gas without vaporizing it, necessary energy for heating the liquefied fuel gas can be reduced compared to a case where the liquefied fuel gas is vaporized. Moreover, since the heater does not vaporize the liquefied fuel gas, the heater is free from restriction on the minimum output of its output range although a vaporizer has such restriction due to difficulty in control when operating the vaporizer with low output. That is, the heater is capable of lower output than the output range of a vaporizer. This makes it possible to suppress excessive supply of thermal energy to the tank. Moreover, since thermal energy is imparted to the entire liquefied fuel gas in the tank, which has a large thermal capacity, a great buffering effect is obtained. Therefore, even if the NBOG is supplied in a manner to respond to frequent output adjustments required by a voyage condition, changes in the internal pressure of the tank are small. For this reason, it is not necessary to frequently adjust the output from the heater.

In the above marine fuel gas supply system, the heater may include at least one heating pipe, through which the liquefied fuel gas passes, and the heating pipe may extend in a ship length direction of the ship.

According to the above configuration, by utilizing the length of the ship in the ship length direction, the heating pipe can be readily arranged in such a manner that a sufficient heat exchange area is secured for obtaining necessary heat transfer for heating the liquefied fuel gas.

In the above marine fuel gas supply system, the ship may include: a spray line, through which the liquefied fuel gas is drawn from the tank and through which the liquefied fuel gas is sprayed into the tank from a top of the tank; and a spray pump configured to pressure-feed the liquefied fuel gas to the spray line. The spray line may be used as the draw piping and the return piping, and the spray pump may be used as the pump.

In the above marine fuel gas supply system, the ship may include a pressure buildup line used to increase an internal pressure of the tank, and the pressure buildup line may be used as the heater.

According to the above configuration, the system of the present invention can be constructed by utilizing equipment installed in a current liquefied fuel gas carrier or the like.

### Advantageous Effects of Invention

The present invention makes it possible to accelerate boil-off of a liquefied fuel gas stored in a tank while realizing energy saving and to stably supply a high-quality fuel gas that contains almost no heavy component to a gas fuelled engine or the like while realizing energy saving.

### Brief Description of Drawings

FIG. 1 shows an overall schematic configuration of a system for supplying a fuel gas to a marine gas fuelled engine according to one embodiment of the present invention.
FIG. 2 shows a schematic configuration of a heater.
FIG. 3 shows a heating pipe provided on a liquefied fuel gas carrier.
FIG. 4 shows heating pipes provided on an ordinary ship except for a liquefied fuel gas carrier.
FIG. 5 shows a variation of the heater.
FIG. 6 shows a schematic configuration of a part of a prior art system for supplying a fuel gas to a gas fuelled engine of an LNG carrier.

### Description of Embodiments

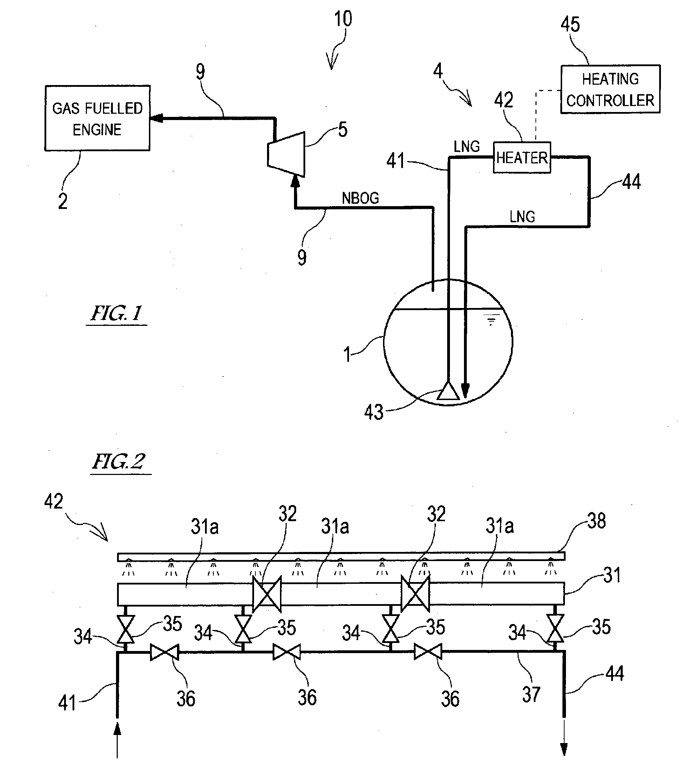

Hereinafter, one embodiment of the present invention is described with reference to the drawings. FIG. 1 shows one embodiment in which the present invention is applied to an LNG carrier including a cargo tank. A fuel gas supply system 10 according to the present embodiment for supplying a fuel gas to a marine gas fuelled engine is a system for supplying NBOG naturally generated in a tank 1, which is a cargo tank, to a gas fuelled engine 2 as a fuel gas. Also, a liquefied fuel gas boil-off accelerating apparatus according to the present embodiment (hereinafter, simply referred to as "boil-off accelerating apparatus 4") is an apparatus for increasing the amount of NBOG generation by accelerating boil-off of a liquefied fuel gas stored in the tank 1.

The gas fuelled engine 2 is an engine using a gas fuel as a fuel. For example, the gas fuelled engine 2 may be a gas fuelled engine used as a propelling main engine of a ship, or may be a gas fuelled engine that is a ship's auxiliary engine intended for electric power generation. The gas fuelled engine 2 may be either a gas fuelled engine using only a gas fuel as a fuel or a dual-fuel engine capable of using both a gas fuel and a heavy fuel oil as fuels. In addition, the gas fuelled engine 2 may be either a 2-cycle engine or a 4-cycle engine.

The fuel gas supply system 10 includes: the tank 1, which stores LNG; the boil-off accelerating apparatus 4; fuel gas supply piping 9 connecting the tank 1 and the gas fuelled engine 2; and a compressor 5 provided on the fuel gas supply piping 9. Although the liquefied fuel gas according to the present embodiment is LNG, the liquefied fuel gas is not limited to LNG, but may be a different liquefied fuel gas, such as LPG.

The tank 1 is a thermally insulated storage tank capable of keeping the temperature of the LNG therein to about -160 °C. In a case where the ship is an LNG carrier as in the present embodiment, a cargo tank is utilized as the tank 1. Inside the tank 1, part of the stored LNG naturally boils off due to, for example, heat entering from the outside, and thereby NBOG is generated. The NBOG is accumulated in the upper part of the tank 1.

The fuel gas supply piping 9 forms a fuel gas supply passage, through which the NBOG generated in the tank 1 is fed to the gas fuelled engine 2 as a fuel gas. The starting edge of the fuel gas supply piping 9 is provided in the upper part of the tank 1 where the NBOG is accumulated. Although the internal pressure of the tank 1 varies depending on, for example, the design pressure of the tank 1 and the voyage condition of the ship, in order to use the NBOG generated in the tank 1 as the fuel gas of the gas fuelled engine 2, it is usually necessary to increase the pressure of the NBOG. The compressor 5 is provided for increasing the pressure of the NBOG. When the compressor 5 operates, the NBOG in the tank 1 is sucked into the fuel gas supply piping 9, and the pressure of the sucked NBOG is increased by the compressor 5 to a pressure required by the gas fuelled engine 2. Then, the NBOG is supplied to the gas fuelled engine 2 as a fuel gas. Although not illustrated, a gas heater for adjusting the temperature of the fuel gas to a temperature required by the gas fuelled engine 2, a buffer tank for absorbing a change in the pressure of the fuel gas, and so forth may be provided on the fuel gas supply piping 9.

The boil-off accelerating apparatus 4 includes: a heater 42 configured to heat the LNG; draw piping 41, through which the LNG in the tank 1 is fed to the heater 42; a pump 43 configured to pressure-feed the LNG to the heater 42; and return piping 44, through which the LNG heated by the heater 42 is introduced, in liquid form, into a liquid layer of the LNG in the tank 1.

The heater 42 heats the LNG to such a degree as not to cause vaporization of the LNG. The heater 42 according to the present embodiment is a heat exchanger that transfers heat from the atmosphere to the LNG. Although the heater 42 does not actively vaporize the LNG, part of the LNG is allowed to vaporize. A specific configuration of the heater 42 will be described below in detail.

The interior of the tank 1 and the heater 42 are connected by the draw piping 41. The draw piping 41 forms a passage, through which the LNG is fed to the heater 42 from the tank 1. In the present embodiment, the pump 43 is provided at the starting edge of the draw piping 41. The pump 43 is disposed at the bottom of the tank 1 so that the LNG can be fed to the heater 42 even if the amount of LNG stored in the tank 1 is reduced. When the pump 43 operates, the LNG stored in the tank 1 is fed to the heater 42 in a pressurized state.

The heater 42 and the interior of the tank 1 are connected by the return piping 44. The return piping 44 forms a passage, through which the LNG that has been heated by the heater 42 is introduced, in liquid form, into the liquid layer of the LNG in the tank 1. The heated LNG in the return piping 44 is in the state of being pressurized by the pump 43, such that the LNG does not vaporize. The ending edge of the return piping 44 is positioned at the bottom of the tank 1 so that the heated LNG can be introduced into the liquid layer of the LNG even if the amount of LNG stored in the tank 1 is reduced, for example, during a ballast voyage. It is desirable to return the heated LNG to the bottom of the tank 1 since an upward flow occurs from the bottom of the liquid layer of the LNG as a result of the introduction of the heated LNG. However, as an alternative, the ending edge of the return piping 44 may be disposed within a gaseous layer in the upper part of the tank 1 or within the liquid layer of the LNG in the middle part, i.e., between the upper and lower parts, of the tank 1.

The heated LNG introduced into the liquid layer of the LNG in the tank 1 is mixed with the LNG in the tank 1. Thermal energy that has been imparted to the heated LNG by the heater 42 is absorbed by the LNG in the tank 1. The thermal energy absorbed by the LNG accelerates the boil-off of methane and nitrogen in the LNG, whose boiling points are low. In this manner, the boil-off of the LNG in the tank 1 is accelerated, and thereby the amount of NBOG generation in the tank 1 can be increased. Moreover, since thermal energy is imparted to the entire LNG in the tank, which has a large thermal capacity, a great buffering effect is obtained. Therefore, even if the NBOG is supplied in a manner to respond to frequent output adjustments required by a voyage condition, changes in the internal pressure of the tank are small. For this reason, it is not necessary to frequently adjust the output from the heater.

The NBOG, which is generated by heat entering from the outside and the above-described additional heat, is accumulated in the upper part of the tank 1. As previously described, the NBOG is fed to the gas fuelled engine 2 as a fuel gas, and is used for pressurizing the interior of the tank 1. Unlike FBOG obtained by vaporizing LNG by a vaporizer, the NBOG is a gas that contains methane having a low boiling point as a major component. That is, since the NBOG contains almost no heavy component, which is the cause of knocking, the NBOG is a high-quality fuel gas containing ideal components for the gas fuelled engine 2. As described above, in the fuel gas supply system 10, since the generation of the NBOG is accelerated in the tank 1, the high-quality fuel gas containing almost no heavy component can be stably supplied to the gas fuelled engine 2.

Hereinafter, one example of a specific structure of the heater 42 is described. FIG. 2 shows a schematic configuration of the heater 42 according to the present embodiment. The heater 42 shown in FIG. 2 includes: a supply header 37 connected to each of the draw piping 41 and the return piping 44; and a heating pipe 31 connected to the supply header 37 by connecting pipes 34.

In a case where the tank 1 is a cargo tank of an LNG carrier as in the present embodiment, a spray line provided for the cargo tank can be utilized as the draw piping 41 and the return piping 44, and a spray pump provided for the cargo tank can be utilized as the pump 43. It should be noted that the spray line is piping, through which the LNG is drawn from the cargo tank and through which the LNG is sprayed into the cargo tank from the top of the cargo tank. The spray pump is a pump configured to pressure-feed the LNG to the spray line. If the ship is provided with a pressure buildup line, the pressure buildup line can be utilized as the heating pipe 31. The pressure buildup line is piping utilized in some LNG carriers as an alternative means of cargo unloading. When a failure has occurred in an unloading pump, the pressure buildup line is utilized for pressurizing the interior of the cargo tank to unload the cargo. The LNG in the cargo tank is pressure-fed to a vaporizer (not shown) by the spray pump. FBOG obtained by vaporizing the LNG by the vaporizer is fed through the pressure buildup line to the cargo tank to be pressurized, and thereby the interior of the cargo tank is pressurized. As thus described, the boil-off accelerating apparatus 4 can be constructed by utilizing equipment originally installed in the ship.

The heating pipe 31 is a thermally uninsulated bare pipe whose surface is exposed to the outside air. By using such a bare pipe as the heating pipe 31, the structure of the heater 42 can be simplified. While the LNG is passing though the heating pipe 31, heat entering the heating pipe 31 from the outside is transferred to the LNG. In other words, while passing through the heating pipe 31, the LNG exchanges heat with the atmosphere, and is thereby heated up. Thus, the heating medium of the heater 42 is the atmosphere, and the heater 42 imparts the heat of the atmosphere to the LNG. Therefore, additional supply of energy is unnecessary in order to heat the LNG by the heater 42.

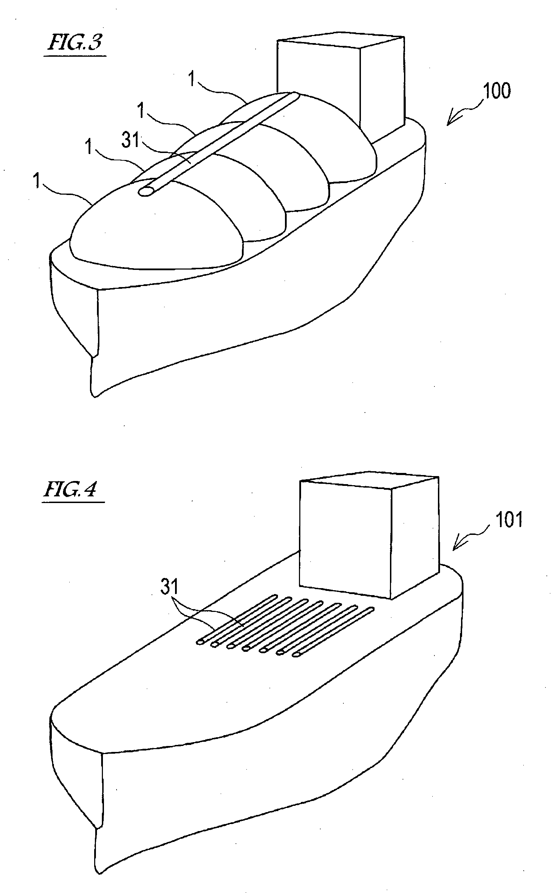

In order to obtain necessary heat transfer from the atmosphere for heating the LNG, the heating pipe 31 is designed to utilize the large long shape of the ship so that a large heat exchange area can be secured. Such a heating pipe 31 is readily realized by utilizing the length of the ship in the ship length direction. FIG. 3 shows one example in which the heating pipe 31 is provided on an LNG carrier 100. The LNG carrier 100 is provided with at least one heating pipe 31 extending in the ship length direction across a plurality of cargo tanks (tanks 1) arranged in the ship length direction. FIG. 4 shows one example in which heating pipes 31 are provided on an ordinary ship 101. On the ship 101, a plurality of heating pipes 31 are arranged parallel to one another.

Assume that a 100A pipe (a pipe with an external diameter of about 114 mm) with a length of 50 m is used as the heating pipe 31 as one example of the heating pipe 31 utilizing the large long shape of the ship. In this case, if the temperature of the atmosphere is a normal temperature, and the navigation speed of the ship is 18 kts (a wind velocity of 9 m/sec), and the surface of the heating pipe 31 is covered with ice having a thickness of 20 mm, then the LNG in the heating pipe 31 can receive thermal energy at a rate of about 100,000 kcal/h, which is equivalent to energy for generating NBOG at a rate of about 820 kg/h. As another example, assume that a 50A pipe (a pipe with an external diameter of about 60 mm) with a length of 50 m is used as the heating pipe 31. In this case, if the temperature of the atmosphere is a normal temperature, and the navigation speed of the ship is 18 kts (a wind velocity of 9 m/sec), and the surface of the heating pipe 31 is covered with ice having a thickness of 20 mm, then the LNG in the heating pipe 31 can receive thermal energy at a rate of about 74,000 kcal/h, which is equivalent to energy for generating NBOG at a rate of about 610 kg/h.

The degree of heating of the LNG by the heater 42, i.e., the amount of thermal energy imparted to the LNG by the heater 42, is adjusted by the length of the heating pipe 31, through which the LNG passes. For the adjustment, the heating pipe 31 includes a plurality of heating regions 31 a, which are arranged in the pipe length direction of the heating pipe 31. The plurality of heating regions 31 a are formed by segmenting the heating pipe 31 by at least one on-off valve 32. Each heating region 31a is provided with at least one connecting pipe 34. The heating pipe 31 according to the present embodiment includes three heating regions 31a. The most upstream heating region 31a is provided with two connecting pipes 34, and each of the heating regions 31a downstream therefrom is provided with one connecting pipe 34. In addition, on-off valves 35 and 36 are provided at suitable positions on the connecting pipes 34 and the supply header 37. Opening and closing of each of the on-off valves 32, 35, and 36 may be controlled by a heating controller 45.

With the above configuration of the pipes of the heater 42, an LNG passage is formed in such a manner that the number of heating regions 31a through which the LNG passes can be selected. By selectively opening and closing the on-off valves 32, 35, and 36, the number of heating regions 31a through which the LNG passes can be increased or decreased. By increasing the number of heating regions 31a through which the LNG passes, the thermal energy imparted to the LNG by the heater 42 can be increased. Similarly, by decreasing the number of heating regions 31a through which the LNG passes, the thermal energy imparted to the LNG by the heater 42 can be decreased. It should be noted that the heating pipe 31 may include a plurality of heating regions 31a with different lengths. In this case, the amount of thermal energy imparted to the LNG is changed by changing the combination of the selected heating regions 31a. This makes it possible to increase the degree of freedom in setting the amount of thermal energy to be imparted to the LNG by the heater 42.

In a case where the amount of NBOG naturally generated during a voyage is insufficient, the pump 43 of the boil-off accelerating apparatus 4 is operated to accelerate the generation of the NBOG. Although the amount of thermal energy imparted to the LNG by the heater 42 may be constant, the amount of imparted thermal energy may also be increased or decreased in accordance with a voyage plan of the ship. It can be predicted from the voyage plan of the ship when the fuel consumption by the gas fuelled engine 2 will increase. Accordingly, for example, the heater 42 may be adjusted to increase the thermal energy to be imparted to the LNG by the heater 42 in accordance with a time when the fuel consumption by the gas fuelled engine 2 is predicted to increase. As a result, when the fuel consumption by the gas fuelled engine 2 increases, the NBOG is stored in the tank 1 in an amount that allows for the increase.

In a case where a low-temperature liquid such as LNG is flowed through a thermally uninsulated bare pipe placed in the atmosphere, frost is formed on the pipe surface due to humidity in the atmosphere when the weather is fine. Thereafter, over time the frost builds up, and thereby a layer of ice is formed on the pipe surface. On the other hand, in the case of rainy weather, a layer of ice is directly formed on the pipe surface. The thermal conductivity of frost is about 1/10 of that of ice. Accordingly, in a case where frost is formed on the pipe surface, the amount of heat exchange is less than in a case where a layer of ice is formed on the pipe surface. Therefore, in order to realize high heat exchange efficiency from the early stage of the operation of the heater 42, it is effective to sprinkle water on the heating pipe 31 and form a layer of ice on the pipe surface. Accordingly, the heater 42 may include a water sprinkling device 38 configured to sprinkle water on the heating pipe 31. The water sprinkling device 38 may be formed by, for example, a nozzle pipe provided with a plurality of nozzles and a water source that feeds water (sea water) to the nozzle pipe. A fire hydrant provided in a ship can be used as the water source. Instead of the nozzle pipe, a sprinkler or a hose may be used.

Next, advantages of the present invention are described by comparing the present invention with the prior art described in Patent Literature 1.

In the fuel gas supply system 10 according to the embodiment of the present invention, the fluid introduced into the liquid layer of the LNG in the tank 1 is heated LNG. On the other hand, in the prior art described in Patent Literature 1 (see FIG. 6), the fluid introduced into the liquid layer of the LNG in the tank 1 is FBOG. Since the fluid introduced into the liquid layer of the LNG in the tank 1 is not FBOG but heated LNG (in liquid form), the present invention has advantages as described below compared to the prior art.

The density of the heated LNG is higher than that of FBOG, and the temperature difference between the heated LNG and the liquid layer of the LNG in the tank 1 is small. Accordingly, when the heated LNG is introduced into the liquid layer of the LNG, the introduced LNG is easily mixed with the surrounding LNG.

In the present invention, LNG passes through the draw piping 41, and heated LNG passes through the return piping 44. Although the heated LNG has an increased volume compared to the LNG passing through the draw piping 41, the increase in volume is small since they are the same liquid. Therefore, it is not necessary to increase the diameter of the return piping 44 compared to the diameter of the draw piping 41. On the other hand, in the prior art (see FIG. 6), since the liquid is transformed into gas by the vaporizer 140, piping with a diameter greater than that of the piping 141 for drawing the LNG from the tank 1 is adopted as the piping 144 for returning the FBOG into the tank 1.

In the fuel gas supply system 10 according to the embodiment of the present invention, the heater 42 is used to heat the LNG. The heater 42 is configured to increase the temperature of the LNG by causing a large amount of LNG to exchange heat with the atmosphere. On the other hand, in the prior art described in Patent Literature 1 (see FIG. 6), the vaporizer 140 is used to heat the LNG. In general, the vaporizer 140 is configured to vaporize the LNG through heat exchange between the LNG and steam generated by a boiler. Since the present invention uses not the vaporizer 140 but the heater 42 to heat the LNG, the present invention has advantages as described below compared to the prior art.

Since the heating medium of the heater 42 is the atmosphere, no energy for heating the heating medium is required. On the other hand, since the heating medium of the vaporizer 140 is steam, energy for generating the steam by the boiler is necessary. Therefore, the initial and running costs of the heater 42 can be reduced compared to the vaporizer 140.

In the heater 42, the LNG (liquid) and the atmosphere (gas) exchange heat with each other. On the other hand, in the vaporizer 140, after the LNG has vaporized, the LNG (gas) and the steam (gas) exchange heat with each other. The heat transfer rate in liquid-to-gas heat exchange is higher than that in gas-to-gas heat exchange. Therefore, the heat exchanger effectiveness of the heater 42 is higher than that of the vaporizer 140.

In the case of the heater 42, it is not necessary to perform temperature control of the heating medium (the atmosphere), and merely opening and closing valves for selecting a passage will suffice. Thus, basically, delicate control of the heater 42 is unnecessary. Since thermal energy can be imparted to the entire liquefied fuel gas in the tank 1, which has a large thermal capacity, a great buffering effect is obtained. Therefore, even when the NBOG is supplied in a manner to respond to frequent output adjustments required by a voyage condition, changes in the internal pressure of the tank 1 are small. For this reason, it is not necessary to frequently adjust the output from the heater 42. On the other hand, in the case of the vaporizer 140, in order to vaporize the entire amount of LNG except certain heavy components, the supply amount and supply pressure of the LNG, the supply amount of the steam, the temperature of the vaporized LNG gas, etc., are controlled.

Since the vaporizer 140 is required to vaporize the entire amount of LNG, a certain minimum output is set for the output range of the vaporizer 140, and it is difficult to operate the vaporizer 140 with an output less than the minimum output. On the other hand, the output range of the heater 42 can be adjusted by designing and selecting the length of the pipe through which the LNG passes, and there is no particular restriction on the lower side of the output. Thus, the heater 42 can be operated with a lower output than the output range of the vaporizer 140. This makes it possible to suppress excessive supply of thermal energy to the tank 1 in the fuel gas supply system 10.

Since the heater 42 sends out the liquid to the return piping 44, heavy components of the LNG do not remain alone in the heater 42, but the entire LNG is sent out of the heater 42 to the return piping 44. On the other hand, in the case of the vaporizer 140, there is a possibility that part of the heavy components of the LNG does not vaporize and remains in the vaporizer 140, and removal of the remaining heavy components needs to be performed regularly.

### [Variations]

Although a preferred embodiment of the present invention has been described above, the above-described fuel gas supply system 10 can be modified, for example, as described below.

In the above-described embodiment, for example, the fuel gas supply system 10 includes one tank 1. However, as an alternative, the fuel gas supply system 10 may include a plurality of tanks 1. In a case where the fuel gas supply system 10 includes a plurality of tanks 1, the fuel is supplied to the gas fuelled engine 2 from the plurality of tanks 1. Here, it will suffice if the boil-off accelerating apparatus 4 is connected to at least one of the plurality of tanks 1.

Further, in the above-described embodiment, for example, the fuel gas supply system 10 is configured to supply the fuel gas to the gas fuelled engine 2. However, as an alternative, the fuel gas supply system 10 may be configured as a system for supplying the fuel gas not to the gas fuelled engine 2 but to an apparatus using the fuel gas, such as a boiler, or as a system for supplying the fuel gas to both the gas fuelled engine 2 and the apparatus using the fuel gas.

Still further, for example, the heating pipe 31 of the heater 42 is configured such that the number of heating regions 31a through which the LNG passes can be selected in order to adjust the length of the passage for the LNG. An alternative configuration may be adopted, in which the number of heating pipes 31 through which the LNG passes can be selected. FIG. 5 shows a first variation of the heater 42. The heater 42 shown in FIG. 5 includes: a plurality of heating pipes 31 arranged parallel to one another; connecting pipes 34a connecting between the heating pipes 31 and the draw piping 41; and connecting pipes 34b connecting between the heating pipes 31 and the return piping 44. The connecting pipes 34a and 34b are provided with on-off valves 35a and 35b. The heating pipes 31 are thermally uninsulated bare pipes. It should be noted that, in a case where the heater includes a plurality of heating pipes 31 in this manner, each heating pipe 31 may be a pipe with a less diameter than that of the heating pipe 31 used in the above-described embodiment, in which one heating pipe 31 is segmented into a plurality of heating regions.

In the heater 42 with the above-described configuration, an LNG passage is formed, in which the number of heating pipes 31 through which the LNG passes can be selected. By selectively opening and closing the on-off valves 35a and 35b provided on the connecting pipes 34a and 34b, the number of heating pipes 31 through which the LNG passes can be changed. By changing the number of heating pipes 31 through which the LNG passes, the thermal energy imparted to the LNG can be increased or decreased.

As other variations of the heater 42, a plurality of tubular members arranged on a single panel may be used as heating pipes 31, or a tubular member that is provided with plate-shaped fins for the purpose of increasing its heat-receiving area may be used as a heating pipe 31, or a pipe that has a coiled shape for the purpose of increasing its heat exchange area may be used as a heating pipe 31.

From the foregoing description, numerous modifications and other embodiments of the present invention are obvious to a person skilled in the art. Therefore, the foregoing description should be interpreted only as an example and is provided for the purpose of teaching the best mode for carrying out the present invention to a person skilled in the art. The structural and/or functional details may be substantially altered without departing from the spirit of the present invention.

### Reference Signs List

1 tank
2 gas fuelled engine
4 boil-off accelerating apparatus (liquefied fuel gas boil-off accelerating apparatus)
   41 draw piping
   42 heater
   43 pump
   44 return piping
   45 heating controller
5 compressor
9 fuel gas supply piping
10 fuel gas supply system
31 heating pipe
32, 35, 36 on-off valve
34 connecting pipe
37 supply header

## Claims

1. A liquefied fuel gas boil-off accelerating apparatus for accelerating boil-off of a liquefied fuel gas stored in a tank, the liquefied fuel gas boil-off accelerating apparatus comprising:
a heater configured to heat the liquefied fuel gas;
a pump configured to pressure-feed the liquefied fuel gas stored in the tank to the heater;
draw piping, through which the liquefied fuel gas is fed to the heater from the pump; and
return piping, through which the liquefied fuel gas heated by the heater is fed, in liquid form, into the tank.

2. The liquefied fuel gas boil-off accelerating apparatus according to claim 1, wherein
the heater is a heat exchanger configured to transfer heat from an atmosphere to the liquefied fuel gas.

3. The liquefied fuel gas boil-off accelerating apparatus according to claim 2, wherein
the heater includes at least one heating pipe, through which the liquefied fuel gas passes, and
the heating pipe is a bare pipe whose surface is exposed to the atmosphere.

4. The liquefied fuel gas boil-off accelerating apparatus according to claim 3, wherein
the heating pipe includes a plurality of heating regions arranged in a pipe length direction of the heating pipe, and
a liquefied fuel gas passage, in which the number of the heating regions through which the liquefied fuel gas passes is selectable, is formed in the heater.

5. The liquefied fuel gas boil-off accelerating apparatus according to claim 3, wherein
the heater includes a plurality of the heating pipes, and
a liquefied fuel gas passage, in which the number of the heating pipes through which the liquefied fuel gas passes is selectable, is formed in the heater.

6. The liquefied fuel gas boil-off accelerating apparatus according to any one of claims 1 to 5, wherein
the pump pressurizes the liquefied fuel gas, such that the liquefied fuel gas in the return piping does not vaporize.

7. The liquefied fuel gas boil-off accelerating apparatus according to any one of claims 1 to 6, wherein
an ending edge of the return piping is positioned at a bottom of the tank.

8. The liquefied fuel gas boil-off accelerating apparatus according to any one of claims 1 to 7, wherein
the heater includes:
at least one heating pipe, through which the liquefied fuel gas passes; and
a sprinkling device configured to sprinkle water on a surface of the heating pipe.

9. A marine fuel gas supply system for supplying a fuel gas to a gas fuelled engine installed in a ship, the marine fuel gas supply system comprising:
a tank storing a liquefied fuel gas;
the liquefied fuel gas boil-off accelerating apparatus according to any one of claims 1 to 8; and
fuel gas supply piping, through which a boil-off gas generated from the liquefied fuel gas stored in the tank is fed to the gas fuelled engine.

10. The marine fuel gas supply system according to claim 9, wherein
the heater includes at least one heating pipe, through which the liquefied fuel gas passes, and
the heating pipe extends in a ship length direction of the ship.

11. The marine fuel gas supply system according to claim 9 or 10, wherein
the ship includes:
a spray line, through which the liquefied fuel gas is drawn from the tank and through which the liquefied fuel gas is sprayed into the tank from a top of the tank; and
a spray pump configured to pressure-feed the liquefied fuel gas to the spray line, the spray line is used as the draw piping and the return piping, and
the spray pump is used as the pump.

12. The marine fuel gas supply system according to claim 9 or 10, wherein
the ship includes a pressure buildup line used to increase an internal pressure of the tank, and
the pressure buildup line is used as the heater.
